# DEMANDE DE BREVET EUROPEEN

(11) **EP 4 520 629 A1**
(43) Date de publication de la demande: **12.03.2025**
(21) Numéro de dépôt: 24199271.8
(22) Date de dépôt: 09.09.2024
(51) Int. Cl.: B62D 1/16, B62D 1/20, B62D 65/14

(54) **DISPOSITIF D'AIDE AU MONTAGE D'UN ENSEMBLE DE DIRECTION D'UN VÉHICULE AUTOMOBILE ET PROCÉDÉ DE MONTAGE L'UTILISANT**

(30) Priorité: 08.09.2023 FR 2309479
(71) Demandeur: Renault s.a.s, 92100 Boulogne Billancourt (FR)
(72) Inventeur: ARUMUGAM, Sharathkumar, 78084 Guyancourt Cedex (FR); LARVOR, Philippe, 78084 Guyancourt Cedex (FR); PAWLOWSKI, Vincent, 78084 Guyancourt Cedex (FR); WISS, Nicolas, 78084 Guyancourt Cedex (FR)
(74) Mandataire: Lavoix

(57) **Abrégé**

L'invention concerne un dispositif d'aide au montage (5) d'un ensemble de direction d'un véhicule automobile comportant une colonne de direction (1) comprenant des segments d'axe (11, 12), ledit dispositif comprenant un support (51) apte à se solidariser de manière amovible à un segment d'axe de la colonne (11), et un bras (52) s'étendant en saillie dudit support (51) et comprenant une extrémité libre (520) apte à se solidariser de manière réversible à un élément du véhicule (6) qui lui est proximal,
et le procédé d'aide au montage (5) d'un ensemble de direction utilisant ledit dispositif.

## Description

L'invention concerne un dispositif d'aide au montage d'un ensemble de direction d'un véhicule automobile. Elle concerne aussi un procédé de montage d'un ensemble de direction utilisant ledit dispositif.

De façon bien connue, les véhicules automobiles, pour particuliers ou utilitaires, comportent un ensemble de direction comprenant notamment une colonne de direction et une crémaillère de direction.

La colonne de direction comprend plusieurs segments connectés entre eux dont au moins un segment supérieur auquel sera connecté le volant dans l'habitacle du véhicule, et un ou plusieurs segments d'axe dont un segment d'axe inférieur qui comporte une liaison articulée de type cardan en sa partie inférieure avec la crémaillère de direction, cette dernière étant reliée aux organes de direction des roues.

Les segments d'axe de la colonne de direction vont ainsi de la crémaillère de direction, extérieure à l'habitacle du véhicule, jusqu'au segment supérieur dans l'habitacle, en passant à travers un orifice de passage percé dans une paroi de la caisse du véhicule entre l'extérieur et l'intérieur de l'habitacle. Classiquement, cette paroi de la caisse du véhicule, dénommé le tablier, s'étend en partie avant du véhicule, transversalement entre le coffre avant et l'habitacle, et forme une partie du plancher du véhicule.

Lors de la construction d'un véhicule automobile, divers éléments du véhicule, dont la crémaillère de direction, sont installés sur une platine de montage pour être solidarisés à d'autres organes du véhicule lors de l'accostage entre la platine de montage et la caisse du véhicule qui est positionnée au-dessus de ladite platine.

Pour monter l'ensemble de direction, il est possible de monter la colonne de direction depuis l'extérieur et/ou l'intérieur de l'habitacle, en la faisant passer dans l'orifice de passage traversant le tablier. Il faut que le segment d'axe inférieur puisse être connecté à la crémaillère de direction placée sur la platine de montage, en général par liaison articulée de type cardan. Plus précisément, le segment d'axe inférieur est connecté par cardan au pignon de la crémaillère de direction.

Selon les configurations de la partie avant du véhicule et de l'orifice de passage, la colonne de direction peut être au moins en partie assemblée puis connectée à la crémaillère, ou elle peut être montée par segment.

Dans certaines configurations de véhicules, le montage de l'ensemble de direction est difficile à réaliser, les segments de colonne devant pouvoir être installés l'un au-dessus de l'autre et selon la direction axiale de la colonne avec un angle d'inclinaison à respecter entre les points de raccordement des segments d'axe de la colonne respectivement avec le segment supérieur de la colonne et avec la crémaillère de direction.

En outre lors d'un montage par segment, il peut être nécessaire de faire passer le segment d'axe inférieur dans l'orifice de passage, de manière automatisée, quand la caisse du véhicule est positionnée au-dessus de la platine de montage, à l'étape d'accostage entre la platine de montage et la caisse du véhicule. Il faut donc que le segment d'axe inférieur puisse passer de manière adéquate dans l'orifice de passage, donc qu'il soit orienté vers cet orifice. La partie à connecter de la crémaillère de direction peut être excentrée par rapport à l'orifice de passage.

Des difficultés peuvent provenir de contraintes ergonomiques telles que la position et/ou la taille de l'orifice de passage et de son accès, et/ou éventuellement de la longueur du segment inférieur et aussi de la mobilité du segment inférieur monté sur une articulation pluridirectionnelle ayant un nombre élevé de degrés de dispersion.

La longueur du segment d'axe peut être assez facilement adaptée pour que le segment soit assez long pour traverser l'orifice, mais l'emplacement et/ou la taille de l'orifice de passage peuvent entraîner des difficultés du montage de l'ensemble de direction.

Il existe donc un besoin pour réaliser le montage d'un ensemble de direction en fonction de contraintes ergonomiques.

A cet effet, l'invention fournit un dispositif d'aide au montage d'un ensemble de direction d'un véhicule automobile comportant une colonne de direction comprenant des segments d'axe, ledit dispositif comprenant :
- un support apte à se solidariser de manière amovible à un segment d'axe de la colonne, et
- un bras s'étendant en saillie dudit support et comprenant une extrémité libre apte à se solidariser de manière réversible à un élément du véhicule qui lui est proximal.

Le dispositif permet de maintenir le segment d'axe de la colonne à un élément du véhicule, tout en pouvant, par la suite, être retiré du segment de colonne très facilement.

Avantageusement, le support comprend une paroi de forme allongée et creuse apte à entourer le segment d'axe de la colonne et comportant une partie ouverte suivant toute la longueur de ladite paroi. Le support peut ainsi être monté facilement à force autour du segment d'axe de la colonne, sans outillage. En outre, il peut aussi facilement être déposé. Avantageusement encore, ladite paroi est en matière élastique, sa souplesse facilitant son montage et sa dépose sans outillage.

De manière préférée, ledit dispositif comprend un organe de manoeuvre, de préférence en saillie du support. Cet organe de manoeuvre facilite la manipulation du support, et plus spécifiquement sa dépose. En particulier, cet organe de manoeuvre est situé sur ledit support en une localisation différente de celle dudit bras et suivant une direction orientée de sens différent de celui de la direction dudit bras. En particulier, le bras est orienté vers l'extérieur de l'habitacle et vers un élément du véhicule qui lui est proximal et il permet de retenir le dispositif entourant le segment côté extérieur de l'habitacle, alors que l'organe de manoeuvre, orienté différemment pour être accessible depuis l'intérieur de l'habitacle, facilite la dépose du dispositif depuis l'intérieur de l'habitacle.

Avantageusement, ledit dispositif est constitué d'une pièce monobloc. Il peut ainsi être solidarisé au segment de colonne sans avoir à assembler des pièces et être déposé d'un seul tenant, ce qui économise du temps de manoeuvre.

L'invention a également pour objet un procédé de montage d'un ensemble de direction d'un véhicule automobile comprenant une crémaillère de direction et une colonne de direction comportant un segment d'axe inférieur se connectant à ladite crémaillère de direction, ledit procédé comprenant une étape selon laquelle on solidarise audit segment d'axe inférieur, de manière amovible, un dispositif d'aide au montage tel que décrit précédemment. Le procédé permet d'installer et déposer le dispositif d'aide au montage autour du segment d'axe de la colonne, sans le besoin d'outil annexe.

De préférence, dans ledit procédé de montage, on solidarise le dispositif d'aide au montage audit segment d'axe inférieur de la colonne au-dessus de la zone où se connectent ledit segment d'axe et la crémaillère de direction.

Plus particulièrement, dans ledit procédé de montage, le véhicule comporte une caisse comprenant un orifice de passage traversant entre l'extérieur et l'intérieur de l'habitacle, pour le passage du segment d'axe inférieur de la colonne, et ledit procédé comporte des étapes suivant lesquelles :
- on connecte le segment d'axe inférieur de la colonne en son extrémité inférieure à la crémaillère de direction,
- on solidarise le dispositif d'aide au montage audit segment d'axe inférieur en disposant le support du dispositif autour dudit segment d'axe inférieur, de préférence à force, ,
- l'ensemble crémaillère de direction et segment inférieur étant installé sur une platine de montage supportant d'autres éléments du véhicule, on solidarise, de manière réversible et de préférence à force, l'extrémité libre du bras du dispositif à l'un des éléments du véhicule disposés sur la platine de montage, qui lui est proximal, et de sorte que ledit segment d'axe inférieur de la colonne soit orienté suivant une direction prédéfinie en fonction dudit orifice de passage. La connexion entre la crémaillère de direction et le segment d'axe inférieur de la colonne peut être réalisée sur la platine de montage ou avant de les positionner sur la platine. De même, le dispositif d'aide au montage peut être solidarisé au segment d'axe inférieur sur la platine de montage ou avant que le segment d'axe inférieur soit installé sur la platine, et également avant que le segment d'axe soit connecté à la crémaillère ou après cette connexion.

De préférence, ledit élément sur la platine proximal du dispositif est aussi proximal de l'orifice de passage. Plus particulièrement, l'extrémité libre du bras du dispositif d'aide au montage est solidarisée à l'un desdits autres éléments disposés sur la platine de montage. De préférence, on solidarise l'extrémité libre du bras du dispositif à l'un des éléments du véhicule, disposés sur la platine, qui lui est proximal et qui se trouvera à l'extérieur de l'habitacle du véhicule.

En particulier, ledit orifice de passage traversant est réalisé dans la paroi de la caisse du véhicule constituée par le tablier séparant le coffre avant et l'habitacle du véhicule.

Plus particulièrement, dans ledit procédé de montage, la caisse du véhicule est positionnée au-dessus de la platine de montage, et ledit procédé comprend une étape suivant laquelle on fait passer, de manière automatisée, le segment d'axe inférieur de la colonne, ainsi maintenu (à un élément proximal du véhicule), à travers ledit orifice de passage, et de préférence lors de l'accostage entre la caisse et la platine de montage.

En particulier, ledit procédé de montage comprend une étape ultérieure suivant laquelle on dépose le dispositif d'aide au montage, en particulier à l'aide de l'organe de manoeuvre, pour libérer le segment d'axe inférieur de la colonne. Ledit dispositif peut être facilement retiré, par exemple manuellement, à force, par un opérateur.

Avantageusement selon ledit procédé, on dépose ledit dispositif d'aide au montage à travers ledit orifice de passage. De préférence, on dépose ledit dispositif depuis l'intérieur de l'habitacle du véhicule.

Ledit dispositif permet de maintenir le segment d'axe inférieur de la colonne de direction dans une position requise, indexée par rapport à un élément du véhicule qui lui est proximal, pour orienter ledit segment d'axe de colonne connecté à la crémaillère vers l'orifice de passage, afin de faire passer ledit segment d'axe dans ledit orifice de passage lors de l'étape d'accostage entre la platine de montage et la caisse du véhicule.

Le dispositif selon l'invention, en plus d'être facilement posé et déposé autour du segment d'axe de la colonne, a l'avantage d'être recyclable une fois déposé. Il peut ainsi être utilisé plusieurs fois pour le montage de l'ensemble de direction de véhicules de mêmes configurations. Il peut aussi facilement être recyclé comme matériau.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
[Fig. 1] est une vue en perspective, depuis l'intérieur de l'habitacle d'un véhicule, d'un exemple de configuration dans laquelle le montage d'un ensemble de direction d'un véhicule a été réalisé selon un procédé de montage conforme à l'invention.
[Fig. 2] est une vue de côté en perspective, depuis la partie avant du véhicule et extérieure à l'habitacle, d'un dispositif d'aide au montage d'un ensemble de direction disposé autour du segment d'axe inférieur de la colonne de direction et maintenant ledit segment, selon un mode de réalisation de l'invention.
[Fig. 3] est une vue en perspective, depuis l'intérieur de l'habitacle, du dispositif d'aide au montage maintenant le segment d'axe inférieur de la colonne de direction selon la figure 2.
[Fig. 4] est une vue en perspective, depuis l'extérieur de l'habitacle, du coffre avant du véhicule dans lequel passe le segment d'axe inférieur de la colonne de direction installé selon le procédé de montage d'un ensemble de direction d'un véhicule conforme à l'invention.

Les orientations exprimées dans la description des figures sont données en référence à un repère orthonormé XYZ classique d'un véhicule automobile, dans lequel X représente la direction longitudinale, orientée de l'avant vers l'arrière du véhicule, Y la direction transversale orientée de la gauche vers la droite du véhicule, et Z la direction verticale orientée vers le haut du véhicule en position usuelle (reposant sur ses roues).

La description du dispositif d'aide au montage fait référence à ces orientations du véhicule.

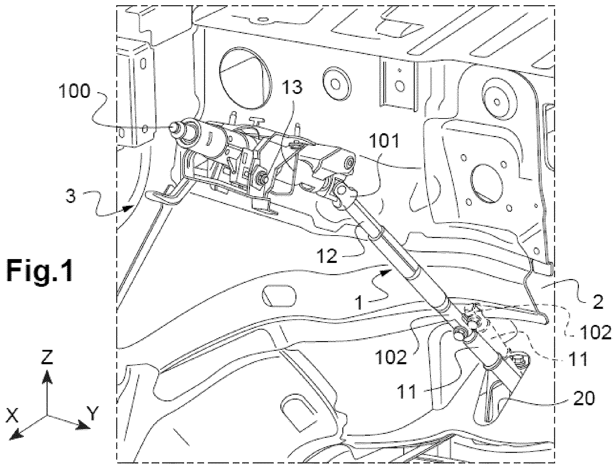

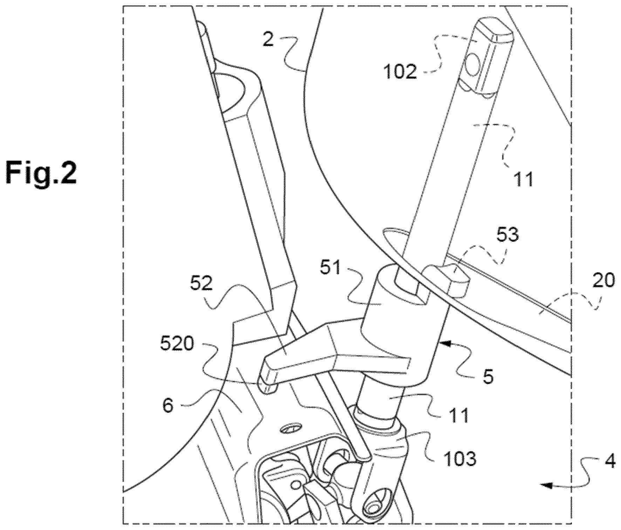

La figure 1 illustre un exemple de configuration d'une partie avant d'un véhicule dans laquelle le montage de l'ensemble de direction du véhicule a été réalisé selon un procédé de montage conforme à l'invention. La configuration posait un problème d'installation de la colonne de direction avec la crémaillère de direction. La colonne de direction comprend un segment supérieur 13 qui se connecte en son extrémité supérieure 100 au volant du véhicule, et un axe comportant un segment d'axe inférieur 11 se connectant en son extrémité supérieure 102 au segment d'axe intermédiaire 12 et en son extrémité inférieure 103 (visible sur les figures 2 à 4) à la crémaillère de direction, plus précisément au pignon de la crémaillère. Le segment d'axe intermédiaire 12 est connecté en son extrémité supérieure 101 au segment supérieur 13.

Un orifice de passage 20 du segment d'axe inférieur 11 de la colonne 1 est percé dans la paroi transversale 2 de la caisse du véhicule située entre l'extérieur et l'intérieur de l'habitacle. Cette paroi 2 est le tablier entre l'intérieur de l'habitacle 3 et le coffre avant 4, extérieur à l'habitacle.

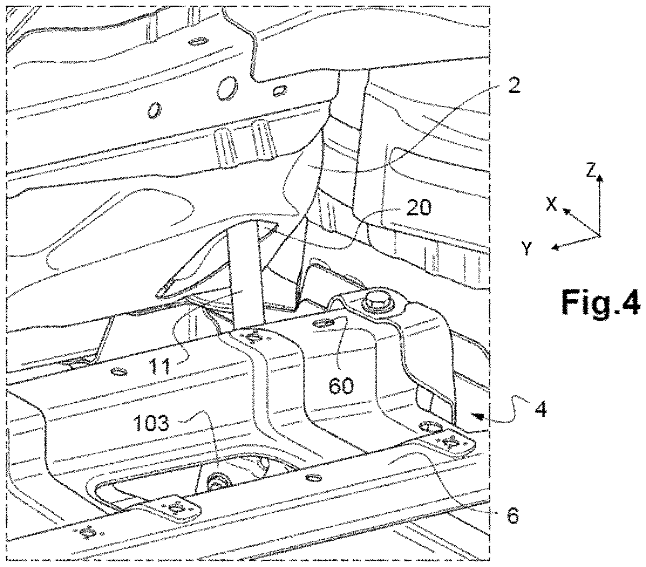

Dans une telle configuration, les contraintes ergonomiques du véhicule, dont l'emplacement et la taille de l'orifice de passage 20 dans le tablier 2, ne permettent pas d'installer la colonne de direction pour la connecter à la crémaillère de direction. En effet, il n'y a pas de possibilité d'accès au segment d'axe inférieur 11 de la colonne de direction 1 à raccorder en son extrémité inférieure 103 à la crémaillère de direction ni depuis l'intérieur de l'habitacle 3 du véhicule (voir Fig. 1), ni depuis le coffre avant 4 du véhicule qui est extérieur à l'habitacle (voir Fig.4).

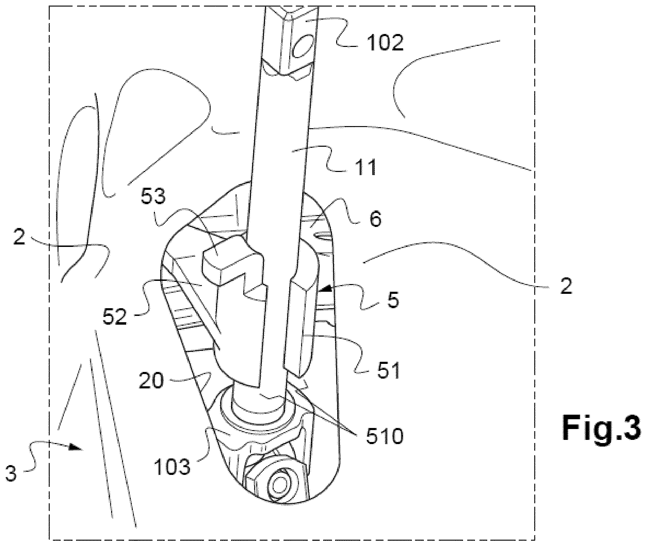

Le segment d'axe inférieur 11 de la colonne 1 est représenté en pointillés, sur la figure 1, après la mise en oeuvre du procédé de montage avec le dispositif d'aide au montage représenté aux figures 2 et 3 pour installer ledit segment d'axe inférieur 11 de la colonne de direction 1 avec la crémaillère de direction, comme expliqué ci-après en référence aux figures 1 à 4.

Les figures 2 et 3 représentent le maintien du segment d'axe inférieur 11 de la colonne de direction 1 avec un dispositif 5 d'aide au montage d'un ensemble de direction, selon un mode de réalisation de l'invention, une fois ledit ensemble dispositif 5 - segment d'axe 11 passé dans l'orifice de passage 20 prévu à cet effet lors du procédé de montage de l'ensemble de direction à l'étape d'accostage entre une platine de montage et la caisse du véhicule.

Ledit dispositif 5 est réalisé sous forme d'une pièce monobloc, en matière plastique à caractère élastique, par exemple par injection/ moulage.

Ledit dispositif 5 comprend un support 51 qui est solidarisé de manière amovible audit segment d'axe inférieur 11, en entourant ledit segment d'axe 11 de la colonne. Le support est constitué d'une paroi de forme cylindrique creuse, en matière élastique, ayant une souplesse permettant de facilement le monter à force autour dudit segment d'axe 11 de la colonne. En outre cette paroi n'est pas totalement fermée sur elle-même, elle comporte une partie ouverte 510, dépourvue de matière, qui s'étend sur une petite largeur de sa circonférence et suivant toute sa longueur, parallèlement à la direction axiale de la paroi. Cette ouverture 510 facilite la pose et la dépose du support 51, l'une et l'autre pouvant se faire simplement à force, manuellement par un opérateur. Ledit dispositif 5 comprend en outre un bras 52, s'étendant en saillie dudit support 51, dont l'extrémité 520 opposée à celle partant du support 51, est recourbée pour être solidarisée, de manière réversible, à un support multifonctions 6 qui lui est proximal dans le coffre avant 4 du véhicule, donc à l'extérieur de l'habitacle. L'extrémité recourbée 520 du bras 52 est insérée à force dans un trou d'accueil 60 (voir Fig.4) que comprend le support multifonctions 6, de manière à maintenir ledit segment d'axe 11 par ledit dispositif 5 audit support multifonctions 6. En d'autres termes, l'extrémité recourbée 520 du bras 52 forme un doigt d'indexage, et le trou d'accueil 60 que comprend l'élément proximal du véhicule 6 constitue un trou d'indexage.

Lors de la construction du véhicule, on utilise une platine de montage sur laquelle sont notamment positionnés divers éléments du véhicule tels que des éléments des suspensions, des tuyaux de freins, des disques de freins, des éléments de motorisation, ainsi que la crémaillère de direction en vue d'assembler ces éléments à d'autres éléments du véhicule lors de l'accostage entre la platine de montage et la caisse du véhicule qui comprend le tablier 2 et qui est positionnée au-dessus de la platine.

La crémaillère de direction et le support multifonctions sont placés à l'avant de la platine (correspondant à l'avant du véhicule).

Le procédé de montage de l'ensemble de direction entre la colonne de direction 1 et la crémaillère de direction comporte les étapes suivantes :
- on connecte le segment d'axe inférieur 11 de la colonne en son extrémité inférieure 103 à la crémaillère de direction, l'ensemble crémaillère de direction et segment d'axe inférieur 11 étant installé sur la platine de montage supportant d'autres éléments du véhicule,
- un opérateur solidarise le dispositif d'aide au montage 5 autour dudit segment d'axe 11 en disposant le support 51 du dispositif 5 autour dudit segment d'axe inférieur 11, à force, au-dessus de la zone où se connectent ledit segment de colonne 11 et la crémaillère de direction, et
- l'opérateur solidarise l'extrémité libre 520 du bras 52 du dispositif 5 en l'insérant dans le trou d'accueil 60 du support multifonctions 6 qui est aussi disposé sur la platine de montage, de sorte que ledit segment d'axe 11 de la colonne soit orienté suivant une direction prédéfinie en fonction dudit orifice de passage 20. Le support multifonctions 6 est proximal de l'orifice de passage 20 et du pignon de la crémaillère qui est connecté à l'extrémité inférieure 103 du segment inférieur de colonne 11, et ce support multifonctions 6 va se trouver au niveau du coffre avant 4, à l'extérieur de l'habitacle du véhicule, lors de l'accostage entre la platine de montage et la caisse.

Ensuite, lors de l'accostage entre la caisse et la platine de montage, la caisse du véhicule est positionnée au-dessus de la platine de montage avec les éléments que cette dernière supporte, on fait passer, de manière automatisée, le segment d'axe inférieur 11 de la colonne connecté à la crémaillère et ainsi maintenu au support multifonctions 6 par ledit dispositif 5, à travers ledit orifice de passage 20.

Dans une étape ultérieure, l'opérateur dépose manuellement le dispositif d'aide au montage 5, le cas échéant à l'aide de l'organe de manoeuvre 53, en désengageant l'extrémité 520 dudit bras 52 du trou d'accueil 60 simplement à force, lors du retrait du support 51 autour du segment 11 à travers ledit orifice de passage 20, et depuis l'intérieur de l'habitacle 3 du véhicule d'où il est facilement accessible (Fig. 3).

Ledit dispositif 5 permet ainsi de maintenir le segment d'axe inférieur de colonne 11 dans la position qui lui a été octroyée, indexée par rapport au support multifonction 6 qui lui est proximal et orientée vers l'orifice de passage 20 du tablier 2 lorsque la caisse du véhicule est positionnée au-dessus de la platine de montage, afin de faire passer ledit segment d'axe 11, ainsi maintenu, dans l'orifice de passage 20 lors de l'accostage entre la platine de montage et la caisse du véhicule. La dépose dudit dispositif 5 permet ultérieurement de désolidariser ledit segment d'axe 11 de l'élément proximal 6 sans outil annexe.

Après la dépose du dispositif 5, l'extrémité supérieure 102 dudit segment d'axe inférieur 11 sera connectée à l'extrémité inférieure du segment d'axe intermédiaire 12 de la colonne de direction 1. L'extrémité supérieure de l'axe intermédiaire 12 sera connectée par une liaison articulée de type cardan, au segment supérieur 13 récepteur en son extrémité 100 du volant. La connexion articulée dudit segment inférieur 11 avec le pignon de la crémaillère permet d'orienter son extrémité supérieure suivant la direction axiale de l'axe de la colonne pour le connecter avec le segment intermédiaire 12, télescopique selon l'exemple.

Ledit dispositif 5 est conçu en fonction des données relatives à l'emplacement et à la taille de l'orifice de passage 20 pour le segment d'axe 11 à maintenir, de l'inclinaison à lui donner pour l'orienter vers l'orifice de passage lors de l'accostage entre la platine de montage et la caisse, et de l'élément du véhicule 6 qui lui est proximal et portant le lieu d'accueil 60 pour son indexage auquel le segment d'axe 11 sera maintenu par ledit dispositif 5.

L'invention n'est toutefois pas limitée à ce mode de réalisation et notamment par l'élément proximal du véhicule. Par exemple, en cas d'un véhicule pour lequel le volant se situe à droite du véhicule, l'élément proximal dans le coffre avant du véhicule peut être le support de batterie.

L'invention peut aussi bien s'appliquer aux véhicules pour particuliers qu'aux véhicules automobiles utilitaires (pour professionnels). L'invention peut aussi bien s'appliquer aux véhicules à motorisation thermique qu'aux véhicules à motorisation hybride ou à motorisation totalement électrique.

## Revendications

1. Dispositif d'aide au montage (5) d'un ensemble de direction d'un véhicule automobile comportant une colonne de direction (1) comprenant des segments d'axe (11, 12), ledit dispositif comprenant :
- un support (51) apte à se solidariser de manière amovible à un segment d'axe de la colonne (11),
- un bras (52) s'étendant en saillie dudit support (51) et comprenant une extrémité libre (520) apte à se solidariser de manière réversible à un élément du véhicule (6) qui lui est proximal.

2. Dispositif selon la revendication 1, **caractérisé en ce que** ledit support (51) comprend une paroi de forme allongée et creuse apte à entourer le segment d'axe de la colonne et comportant une partie ouverte (510) suivant toute la longueur de ladite paroi, et de préférence ladite paroi est en matière élastique.

3. Dispositif selon l'une quelconque des revendications 1 à 2, **caractérisé en ce qu'**il comprend un organe de manoeuvre (53), de préférence en saillie du support (51).

4. Dispositif selon l'une quelconque des revendications 1 à 3, **caractérisé en ce qu'**il est constitué d'une pièce monobloc.

5. Procédé de montage d'un ensemble de direction d'un véhicule automobile comprenant une crémaillère de direction et une colonne de direction (1) comportant un segment d'axe inférieur (11) se connectant à ladite crémaillère de direction, comprenant une étape selon laquelle on solidarise audit segment d'axe inférieur (11), de manière amovible, un dispositif (5) d'aide au montage d'un ensemble de direction suivant l'une quelconque des revendications 1 à 4.

6. Procédé de montage selon la revendication 5, **caractérisé en ce que** l'on solidarise le dispositif d'aide au montage (5) au segment d'axe inférieur de colonne au-dessus de la zone où se connectent ledit segment d'axe inférieur (11) et la crémaillère de direction.

7. Procédé de montage d'un ensemble de direction d'un véhicule automobile selon l'une des revendications 5 à 6, ledit véhicule comportant une caisse comprenant une paroi (2) comportant un orifice de passage (20) traversant entre l'extérieur (4) et l'intérieur (3) de l'habitacle, pour le passage du segment d'axe inférieur (11) de la colonne de direction, ledit procédé comportant des étapes suivant lesquelles :
- on connecte le segment d'axe inférieur (11) de la colonne en son extrémité inférieure (103) à la crémaillère de direction,
- on solidarise le dispositif d'aide au montage (5) audit segment d'axe inférieur (11) en disposant le support (51) du dispositif autour dudit segment d'axe inférieur (11), de préférence à force,
- l'ensemble crémaillère de direction et segment inférieur étant installé sur une platine de montage supportant d'autres éléments du véhicule, on solidarise, de manière réversible et de préférence à force, l'extrémité libre (520) du bras (52) dudit dispositif à l'un des éléments (6) du véhicule disposés sur la platine de montage, qui lui est proximal, et de sorte que ledit segment d'axe inférieur (11) de la colonne soit orienté suivant une direction prédéfinie en fonction dudit orifice de passage (20).

8. Procédé de montage selon la revendication 7, dans lequel la caisse du véhicule est positionnée au-dessus de la platine de montage, et comprenant une étape suivant laquelle on fait passer, de manière automatisée, le segment d'axe inférieur (11) de la colonne de direction, ainsi maintenu, à travers ledit orifice de passage (20), et de préférence lors de l'accostage entre la caisse et la platine de montage.

9. Procédé de montage selon l'une quelconque des revendications 5 à 8, comprenant une étape ultérieure suivant laquelle on dépose le dispositif d'aide au montage (5), en particulier à l'aide de l'organe de manoeuvre (53).

10. Procédé de montage selon la revendication 9 et l'une des revendications 7 à 8, **caractérisé en ce que** l'on dépose ledit dispositif d'aide au montage (5) à travers ledit orifice de passage (20), et de préférence depuis l'intérieur de l'habitacle du véhicule.
